# EUROPEAN PATENT APPLICATION

(11) **EP 4 560 559 A1**
(43) Date of publication of application: **28.05.2025**
(21) Application number: 22951934.3
(22) Date of filing: 19.07.2022
(51) Int. Cl.: G06Q 30/02

(54) **GENERATION PROGRAM, GENERATION METHOD, AND INFORMATION PROCESSING DEVICE**

(71) Applicant: Fujitsu Limited, Kawasaki-shi, Kanagawa 211-8588 (JP)
(72) Inventor: TOGAWA, Taro, Kawasaki-shi, Kanagawa 211-8588 (JP); NAKAZATO, Katsuhisa, Kawasaki-shi, Kanagawa 211-8588 (JP); SUZUKI, Genta, Kawasaki-shi, Kanagawa 211-8588 (JP); KOHATA, Shun, Kawasaki-shi, Kanagawa 211-8588 (JP)
(74) Representative: Hoffmann Eitle
(86) International application number: PCT/JP2022/028127
(87) International publication number: WO 2024/018545

(57) **Abstract**

An information processing device acquires video data. The information processing device inputs the acquired video data to a machine learning model to specify a class of an action of a person included in the video data and a degree of reliability of the class. The information processing device generates question information related to the specified class based on the specified degree of reliability.

## Description

### FIELD

The present invention relates to a generation program, a generation method, and an information processing device.

### BACKGROUND

Accumulation of action histories of a user including a purchase history of a product, a use history of a facility, an order history of a restaurant, and the like as a database to be used for future service has become widespread. For example, answer results of a questionnaire are stored in a database by preparing the questionnaire on a table or the like or sending the questionnaire to a user at a later date.

### SUMMARY

### TECHNICAL PROBLEM

However, a lot of types of processing such as collection, review, and input of questionnaire results occur, and a large amount of processing is requested to construct a database. Note that the number of items in a questionnaire tends to increase because more useful information is desired to be stored in a database, a burden on a user increases, and there are many users who do not answer the questionnaire.

In one aspect, an object is to provide a generation program, a generation method, and an information processing device capable of reducing an amount of processing needed to construct a database.

### SOLUTION TO PROBLEM

In a first idea, a generation program causes a computer to execute processing including: acquiring video data; specifying, by inputting the acquired video data to a machine learning model, a class of an action of a person included in the video data and a degree of reliability of the class; and generating, based on the specified degree of reliability, question information related to the specified class.

### ADVANTAGEOUS EFFECTS OF INVENTION

According to one embodiment, it is possible to reduce an amount of processing needed to construct a database.

### BRIEF DESCRIPTION OF DRAWINGS

FIG. 1 is a diagram illustrating an overall configuration example of an information processing system according to a first embodiment.
FIG. 2 is a diagram for describing a reference technique.
FIG. 3 is a diagram for describing an information processing device according to the first embodiment.
FIG. 4 is a functional block diagram illustrating a functional configuration of the information processing device according to the first embodiment.
FIG. 5 is a diagram for describing a customer DB.
FIG. 6 is a diagram for describing a questionnaire DB.
FIG. 7 is a diagram for describing an analysis result DB.
FIG. 8 is a diagram for describing training data.
FIG. 9 is a diagram for describing machine learning of a relationship model.
FIG. 10 is a diagram for describing generation of an action recognition model.
FIG. 11 is a diagram for describing specification of a relationship.
FIG. 12 is a diagram for describing specification of a relationship by HOID.
FIG. 13 is a diagram for describing action recognition.
FIG. 14 is a diagram for describing generation and transmission of a questionnaire.
FIG. 15 is a diagram for describing registration of an analysis result.
FIG. 16 is a flowchart illustrating a flow of processing according to the first embodiment.
FIG. 17 is a diagram illustrating an example of a scene graph.
FIG. 18 is a diagram for describing a generation example of a scene graph indicating a relationship between a human and a thing.
FIG. 19 is a diagram for describing specification of a relationship by a scene graph.
FIG. 20 is a diagram for describing an action recognition model according to a third embodiment.
FIG. 21 is a diagram for describing machine learning of the action recognition model according to the third embodiment.
FIG. 22 is a diagram for describing questionnaire transmission using the action recognition model according to the third embodiment.
FIG. 23 is a diagram for describing questionnaire transmission according to a fourth embodiment.
FIG. 24 is a diagram for describing a specific example of the questionnaire transmission according to the fourth embodiment.
FIG. 25 is a flowchart illustrating a flow of processing according to the fourth embodiment.
FIG. 26 is a diagram for describing a questionnaire display example of signage according to the fourth embodiment.
FIG. 27 is a diagram for describing a hardware configuration example of the information processing device.
FIG. 28 is a diagram for describing a hardware configuration example of the signage.

### DESCRIPTION OF EMBODIMENTS

Hereinafter, embodiments of a generation program, a generation method, and an information processing device according to the present invention will be described in detail with reference to the drawings. Note that the present invention is not limited by the embodiments. Furthermore, the respective embodiments may be appropriately combined within a range without inconsistency.

### [First Embodiment]

### <Overall Configuration>

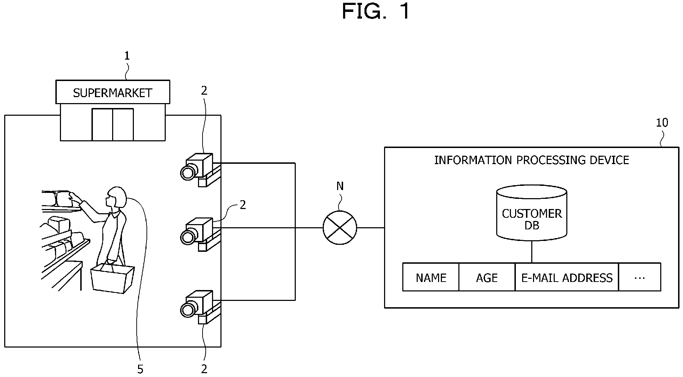

FIG. 1 is a diagram illustrating an overall configuration example of an information processing system according to a first embodiment. As illustrated in FIG. 1, in the information processing system, a store 1 as an example of a space having an area in which a product as an example of an object is arranged, a plurality of cameras 2 installed at locations different from each other in the store 1, and an information processing device 10 that executes analysis of video data are coupled via a network N. Note that, as the network N, various communication networks such as the Internet or a dedicated line may be adopted regardless of wired or wireless.

In the store 1, products to be purchased by customers 5 are displayed as in a supermarket or a convenience store, for example, and a self-checkout machine or the like using, for example, electronic payment or the like is used. Note that an unattended store or the like that may be used by only the registered customers 5 by registering the customers 5 in advance is assumed as an example of the store 1. For example, the customer 5 accesses a website or the like of a manager who manages the store 1, and registers a name, an age, a contact address (for example, an e-mail address or the like), and a payment method (for example, a credit card number or the like). The customer 5 may use a user ID, a password, and a store entry card issued after the registration to enter the store 1 and make a payment by the registered payment method to shop.

Each of the plurality of cameras 2 is an example of a surveillance camera that captures a predetermined region in the store 1, and transmits data of a captured video to the information processing device 10. In the following description, the data of the video may be referred to as "video data". Furthermore, the video data includes a plurality of time-series frames. The respective frames are assigned with frame numbers in a time-series ascending order. One frame is image data of a still image captured by the camera 2 at a certain timing.

The information processing device 10 is an example of a computer device that includes a customer DB storing information regarding the customers 5 permitted to enter the store 1, receives video data from the plurality of cameras 2, and collects various types of data and the like in order to improve service for the customers 5. In the customer DB, a name, an age, a contact address (for example, an e-mail address or the like), a payment method (for example, a credit card number or the like), and the like are registered.

### (Description of Reference Technique)

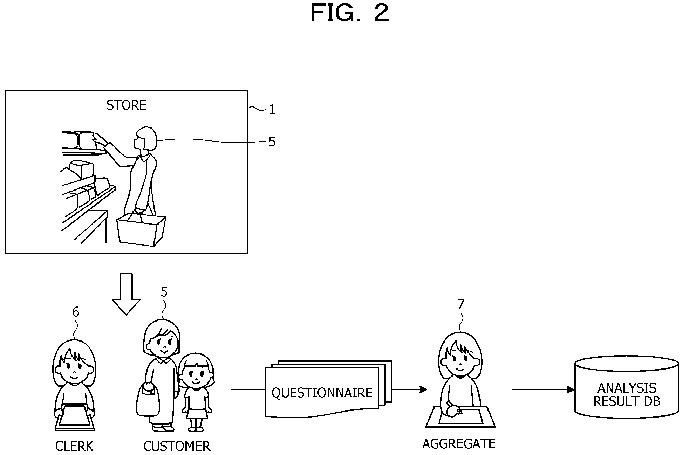

As a measure for improving the service for the customers 5, a questionnaire for the customers 5 is used. FIG. 2 is a diagram for describing a reference technique. As illustrated in FIG. 2, a clerk 6 hands a questionnaire sheet to the customer 5 who has purchased a product at the store 1 or the customer 5 who has entered the store 1 and did not purchase a product when the customer 5 leaves the store. The customer 5 fills in the handed questionnaire sheet and sends the questionnaire sheet by mail or the like. Thereafter, a clerk 7 aggregates the questionnaire sheets sent from the respective customers 5 to create a DB. In accordance with information stored in the DB as described above, consideration is made on a timing for the clerk to start a conversation, an arrangement of products, expansion of products, and the like.

In this manner, in the reference technique, a lot of types of processing such as collection, review, and input of questionnaire results occur, and a large amount of processing is requested to construct the database. Furthermore, the number of items in a questionnaire tends to increase because more useful information is desired to be stored in the database, a burden on a user increases, and there are many users who do not answer the questionnaire.

### (Description of First Embodiment)

Therefore, the information processing device 10 according to the first embodiment recognizes a relationship among humans, things, environment, and actions and attributes of humans from a video of the inside of the store 1, and digitizes a situation (context) of a shop to reduce processing of converting information that may be analyzed into the DB. Specifically, the information processing device 10 inputs video data obtained by capturing an area in the store 1 where products are arranged to a machine learning model, thereby specifying a relationship between a specific user (customer 5) and a product in an action of the customer 5 with respect to the product included in the video data. Subsequently, the information processing device 10 acquires a psychological evaluation of the customer 5 with respect to the product for which the relationship has been specified. Thereafter, the information processing device 10 registers a result related to the specified relationship and the psychological evaluation of the customer 5 in association with each other in a database indicating an analysis result of the product and stored in a storage unit.

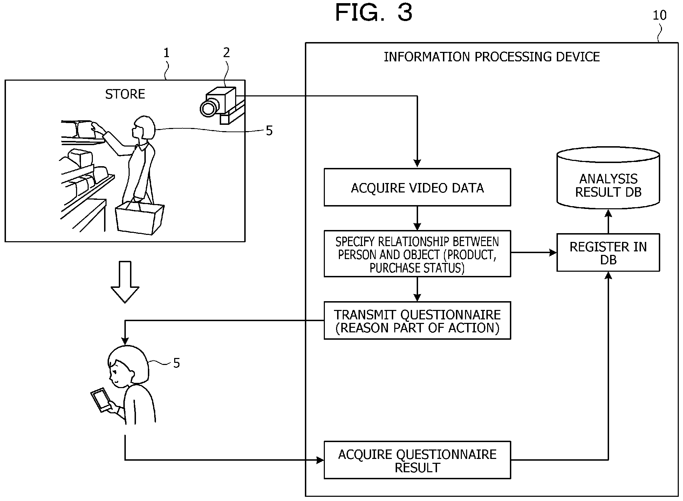

FIG. 3 is a diagram for describing the information processing device 10 according to the first embodiment. As illustrated in FIG. 3, the information processing device 10 acquires video data obtained by capturing the inside of the store 1, inputs the respective frames in the video data to a trained machine learning model, and specifies a relationship between the customer 5 and a product. For example, the information processing device 10 specifies a product purchase status, time, a location, an action (for example, gripping) with respect to the product, and the like.

Subsequently, the information processing device 10 specifies an item that is not specifiable from the video based on the relationship between the customer 5 and the product as a psychological evaluation, generates a questionnaire regarding the psychological evaluation, and transmits the questionnaire to a terminal or the like of the customer 5. For example, the information processing device 10 transmits the questionnaire asking the customer 5 who has not purchased any product a reason for "why didn't you purchase any product?".

Thereafter, when receiving an answer to the questionnaire, the information processing device 10 associates a specification result specified from the video with a questionnaire result to create a DB. For example, the information processing device 10 stores "age, gender, and product purchase status" specified from the video and the questionnaire result of the "reason why a purchase of any product has not been made" in association with each other.

In this manner, the information processing device 10 may recognize actions of visitors in real time from a storefront video or the like and narrow down a target visitor and a transmission timing to automatically transmit the questionnaire. Therefore, the information processing device 10 may acquire only an effective questionnaire result, and thus, an amount of processing needed to construct a database may be reduced.

### <Functional Configuration>

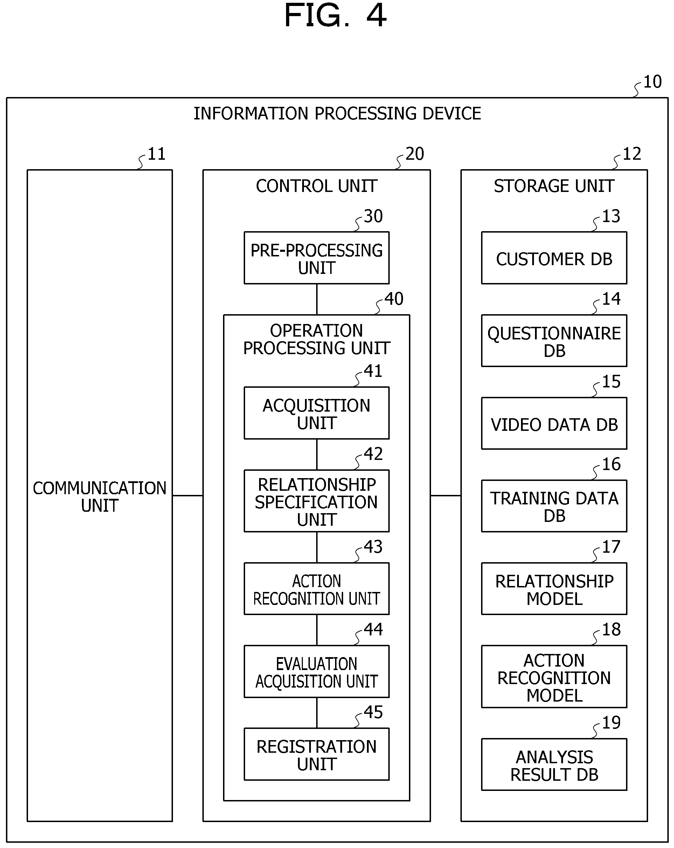

FIG. 4 is a functional block diagram illustrating a functional configuration of the information processing device 10 according to the first embodiment. As illustrated in FIG. 4, the information processing device 10 includes a communication unit 11, a storage unit 12, and a control unit 20.

The communication unit 11 is a processing unit that controls communication with other devices, which is, for example, a communication interface or the like. For example, the communication unit 11 receives video data or the like from each of the cameras 2, and outputs a processing result or the like of the information processing device 10 to a device designated in advance or the like.

The storage unit 12 is a processing unit that stores various types of data, a program to be executed by the control unit 20, and the like, and is implemented by, for example, a memory, a hard disk, or the like. The storage unit 12 stores a customer DB 13, a questionnaire DB 14, a video data DB 15, a training data DB 16, a relationship model 17, an action recognition model 18, and an analysis result DB 19.

The customer DB 13 is a database that stores information regarding the customer 5. The information stored here is information regarding the customer (user) 5 who visits the store 1 and wishes to purchase a product, and is collected and registered by performing user registration prior to the visit to the store.

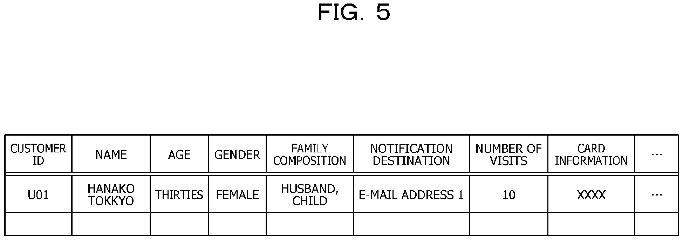

FIG. 5 is a diagram for describing the customer DB 13. As illustrated in FIG. 5, the customer DB 13 stores "customer ID, name, age, gender, family composition, notification destination, number of visits, card information" and the like. The "customer ID" is an identifier for identifying the customer 5. The "name, age, gender, family composition, and card information" are information input by the customer 5 at the time of user registration, and the "number of visits" is the number of visits counted at the time of entry.

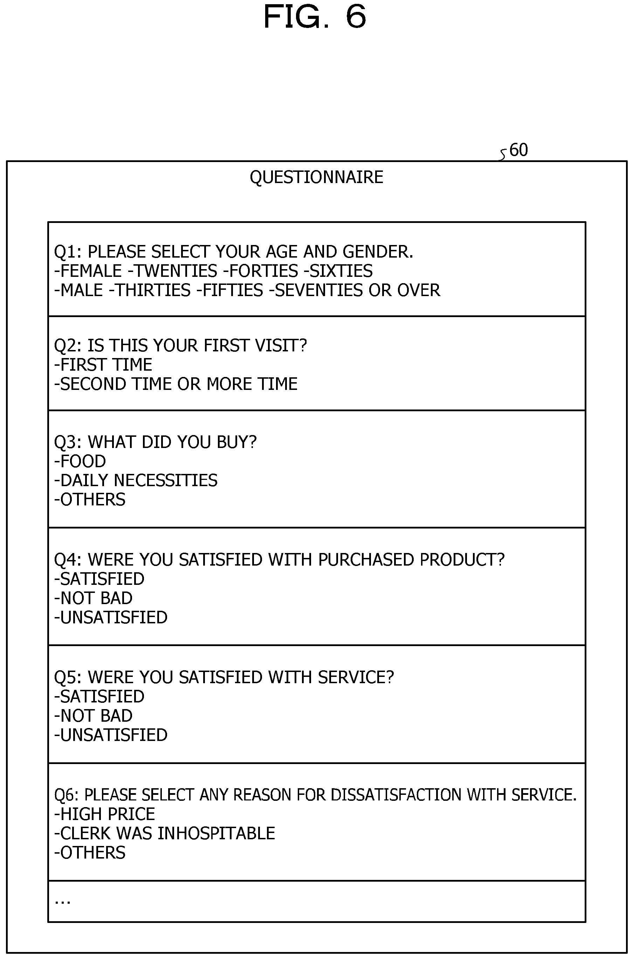

The questionnaire DB 14 is a database that stores a questionnaire to be transmitted to the customer 5. FIG. 6 is a diagram for describing the questionnaire DB 14. As illustrated in FIG. 6, the questionnaire to be transmitted may include a plurality of question items each of which is obtained by associating a question (Q) with selection items.

In the example of FIG. 6, a question 1 (Q1) is a question item for inquiring about age and gender of a customer, and "female/male and twenties/thirties/forties/fifties/sixties/seventies or over" are prepared as answer selection items. Furthermore, a question 3 (Q3) is a question item for inquiring about a type of a purchased product, and "food/daily necessities/others" are prepared as answer selection items.

Note that each question may be associated with 5W1H (when, where, who, what, why, and how) indicating intention of the question. For example, "who" is associated with Q1 "Please select your age and gender", "why" is associated with Q6 "Please select any reason for dissatisfaction with service.", and the like.

The video data DB 15 is a database that stores video data captured by each of the plurality of cameras 2 installed in the store 1. For example, the video data DB 15 stores the video data for each of the cameras 2 or for each captured time zone.

The training data DB 16 is a database that stores various types of training data used for generation of various machine learning models, described in the embodiments, including the relationship model 17, the action recognition model 18, and the like. The training data stored here may include supervised training data to which correct answer information is added and unsupervised training data to which correct answer information is not added.

The relationship model 17 is an example of a machine learning model that specifies a relationship between a person and an object in an action of a specific user with respect to the object included in video data. Specifically, the relationship model 17 is a model for human object interaction detection (HOID) generated by machine learning for identifying a relationship between a person and a person or a relationship between a person and a thing (object).

For example, when the relationship between a person and a person is to be specified, a model for HOID that specifies and outputs a first class indicating a first person and first region information indicating a region where the first person appears, a second class indicating a second person and second region information indicating a region where the second person appears, and a relationship between the first class and the second class according to an input of a frame in video data is used as the relationship model 17.

Furthermore, when the relationship between a person and an object is to be specified, a model for HOID that specifies and outputs a first class indicating a person and first region information indicating a region where the person appears, a second class indicating an object and second region information indicating a region where the object appears, and a relationship between the first class and the second class is used as the relationship model 17.

Note that, merely as an example, the relationship described here is not limited to a simple relationship such as "hold", but includes complicated relationships such as "hold a product A in a right hand", "return a product B to a shelf", and "put a product in a shopping basket". Note that, as the relationship model 17, the two models for HOID described above may be separately used, or one model for HOID generated to identify both the relationship between a person and a person and the relationship between a person and an object may be used. Furthermore, the relationship model 17 is generated by the control unit 20 to be described later, but a model generated in advance may be used.

The action recognition model 18 is an example of a machine learning model that executes recognition of skeleton information and an action of a person from video data. Specifically, the action recognition model 18 outputs recognition results of two-dimensional skeleton information and an action in response to an input of image data. For example, the action recognition model 18 is an example of a deep trainer that estimates two-dimensional joint positions (skeleton coordinates) of a head, wrists, a waist, ankles, and the like with respect to two-dimensional image data of a person, and recognizes a basic motion and a rule defined by a user.

When the action recognition model 18 is used, a basic motion of a person may be recognized, and positions of ankles, an orientation of a face, and an orientation of a body may be acquired. Examples of the basic motion include walking, running, stopping, or the like. The rule defined by the user is a transition of the skeleton information corresponding to each action until a product is taken by a hand, or the like. Note that the action recognition model 18 is generated by the control unit 20 to be described later, but data generated in advance may be used.

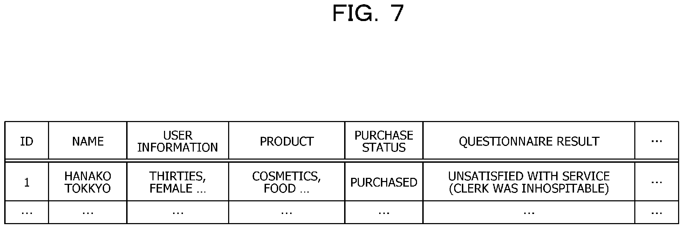

The analysis result DB 19 is a database that stores information regarding an analysis result collected by the information processing device 10. FIG. 7 is a diagram for describing the analysis result DB 19. As illustrated in FIG. 7, the analysis result DB 19 stores "ID, name, user information, product, purchase status, questionnaire result" and the like.

The "ID" is an identifier for identifying an analysis result. The "name" is a name of the customer 5, and is specified using the customer DB 13 at the time of entry or product purchase. The "user information" is age, gender, family composition, and the like of the customer 5, and is specified using the customer DB 13. The "product" is information regarding a product purchased by the customer 5, and is specified using the customer DB 13 when the product is purchased. The "purchase status" is information indicating whether or not a product has been purchased in a visit, and is specified using the customer DB 13 at the time of product purchase. The "questionnaire result" is an answer to a questionnaire transmitted by the control unit 20 to be described later.

An example in FIG. 7 illustrates that "Hanako Tokkyo" corresponds to "thirties and female", has purchased "cosmetics and food" and answered "unsatisfied with service (clerk was inhospitable)" in the questionnaire. The information stored here is used to detect a situation of a shop and determine a response policy. For example, when information such as "presence of visitor, with family, young male and female, and female taking initiative" is registered, the clerk is caused to recommend a product that is intended for families and is popular among females.

Returning to FIG. 4, the control unit 20 is a processing unit that manages the entire information processing device 10, and is implemented by, for example, a processor or the like. The control unit 20 includes a pre-processing unit 30 and an operation processing unit 40. Note that the pre-processing unit 30 and the operation processing unit 40 are implemented by electronic circuits included in the processor, processes executed by the processor, or the like.

### <Pre-Processing Unit 30>

The pre-processing unit 30 is a processing unit that executes generation of the respective models, rules, and the like using training data stored in the storage unit 12 prior to operation of action prediction and questionnaire aggregation performed by the operation processing unit 40.

### (Generation of Relationship Model)

The pre-processing unit 30 is a processing unit that generates the relationship model 17 using training data stored in the training data DB 16. Here, an example in which a model for HOID using a neural network or the like is generated as the relationship model 17 will be described as an example. Note that generation of a model for HOID that specifies a relationship between a person and an object will be described merely as an example, but a model for HOID that specifies a relationship between a person and a person may be similarly generated.

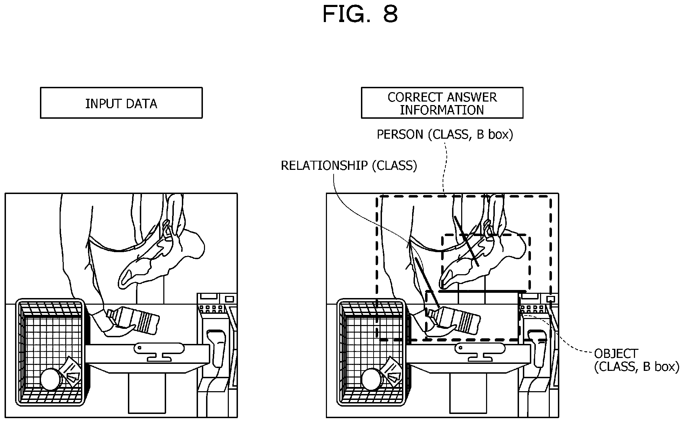

First, training data used for machine learning of the model for HOID will be described. FIG. 8 is a diagram for describing the training data. As illustrated in FIG. 8, each piece of the training data includes image data (explanatory variable) serving as input data and correct answer information (objective variable) set for the image data.

In the correct answer information, a class (first class) of a person to be detected, a class (second class) of an object to be purchased or operated by the person, a relationship class indicating interaction between the person and the object, and a B box (bounding box: region information of the object) indicating a region of each of the classes are set. In other words, information regarding the object gripped by the person is set as the correct answer information. Note that the interaction between the person and the object is an example of a relationship between the person and the object. Furthermore, in a case of being used to specify a relationship between a person and a person, a class indicating the other person is used as the second class, region information of the other person is used as the region information of the second class, and a relationship between the person and the person is used as the relationship class.

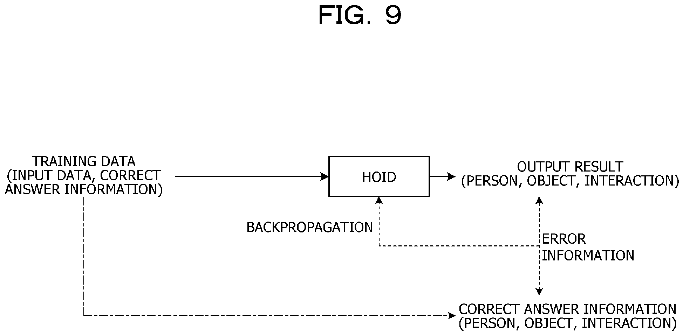

Next, machine learning of the model for HOID using the training data will be described. FIG. 9 is a diagram for describing machine learning of the relationship model 17. As illustrated in FIG. 9, the pre-processing unit 30 inputs the training data into the model for HOID, and acquires an output result of the model for HOID. The output result includes the class of the person, the class of the object, the relationship (interaction) between the person and the object, and the like, which are detected by the model for HOID. Then, the pre-processing unit 30 calculates error information between the correct answer information of the training data and the output result of the model for HOID, and executes machine learning for updating parameters included in the model for HOID by backpropagation so as to reduce an error.

### (Generation of Action Recognition Model 18)

The pre-processing unit 30 is a processing unit that executes generation of the action recognition model 18 using training data. Specifically, the pre-processing unit 30 generates the action recognition model 18 by supervised training using training data with correct answer information (labels).

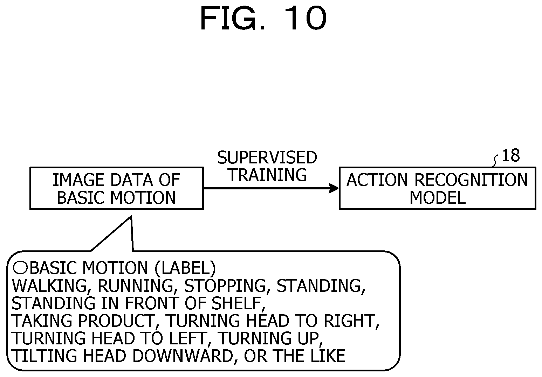

FIG. 10 is a diagram for describing the generation of the action recognition model 18. As illustrated in FIG. 10, the pre-processing unit 30 inputs image data of a basic motion added with a basic motion label to the action recognition model 18, and executes machine learning of the action recognition model 18 so as to reduce an error between an output result of the action recognition model 18 and the label. For example, the action recognition model 18 is a neural network. The pre-processing unit 30 changes parameters of the neural network by executing the machine learning of the action recognition model 18. The action recognition model 18 inputs an explanatory variable that is image data (for example, image data of a person performing a motion of the basic motion) to the neural network. Then, the action recognition model 18 generates a machine learning model in which the parameters of the neural network have been changed so as to reduce an error between an output result output from the neural network and correct answer data (objective variable) that is a basic motion label.

Note that, as the training data, each piece of image data to which "walking", "running", "stopping", "standing", "standing in front of a shelf", "taking a product", "turning the head to the right", "turning the head to the left", "turning up", "tilting the head downward", or the like is added as the "label" may be used. Note that the generation of the action recognition model 18 is merely an example, and other methods may be used. Furthermore, as the action recognition model 18, action recognition disclosed in Japanese Laid-open Patent Publication No. 2020-71665 and Japanese Laid-open Patent Publication No. 2020-77343 may also be used.

### <Operation Processing Unit 40>

Returning to FIG. 4, the operation processing unit 40 is a processing unit that includes an acquisition unit 41, a relationship specification unit 42, an action recognition unit 43, an evaluation acquisition unit 44, and a registration unit 45, and executes transmission of a questionnaire to a person appearing in video data using the respective models prepared in advance by the pre-processing unit 30.

The acquisition unit 41 is a processing unit that acquires video data from each of the cameras 2 and stores the video data in the video data DB 21. For example, the acquisition unit 41 may perform the acquisition from each of the cameras 2 as needed or periodically.

Furthermore, the acquisition unit 41 acquires customer information when the customer 5 enters the store, and outputs the customer information to each processing unit of the operation processing unit 40. For example, the acquisition unit 41 causes a user to execute authentication of a user card or a fingerprint, input of an ID and a password, or the like at the time of entry to acquire a "customer ID" that has entered the store. Then, the acquisition unit 41 refers to the customer DB 13, and acquires a name, age, and the like associated with the "customer ID".

### (Specification of Relationship)

The relationship specification unit 42 is a processing unit that executes relationship specification processing of specifying a relationship between a person and a person or a relationship between a person and an object appearing in video data using the relationship model 17. Specifically, for each of frames included in the video data, the relationship specification unit 42 inputs each of the frames to the relationship model 17 and specifies a relationship according to an output result of the relationship model 17. Then, the relationship specification unit 42 outputs the specified relationships to the evaluation acquisition unit 44, the registration unit 45, and the like.

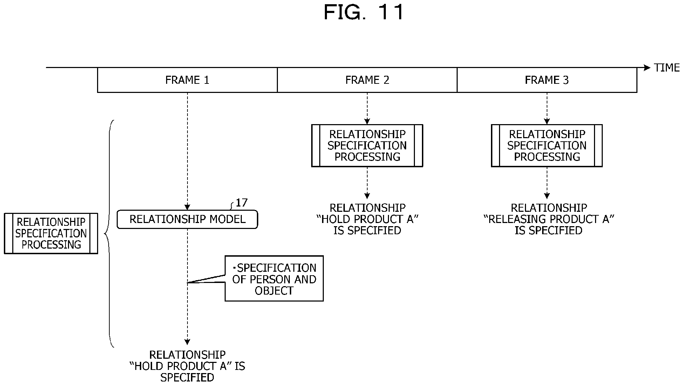

FIG. 11 is a diagram for describing specification of a relationship. As illustrated in FIG. 11, the relationship specification unit 42 inputs a frame 1 to the machine-learned relationship model 17, and specifies a class of a first person, a class of a second person, and a relationship between the persons. As another example, the relationship specification unit 42 inputs the frame to the machine-learned relationship model 17, and specifies a class of a person, a class of an object, and a relationship between the person and the object. In this manner, the relationship specification unit 42 specifies the relationship between persons or the relationship between a person and an object for each of the frames using the relationship model 17.

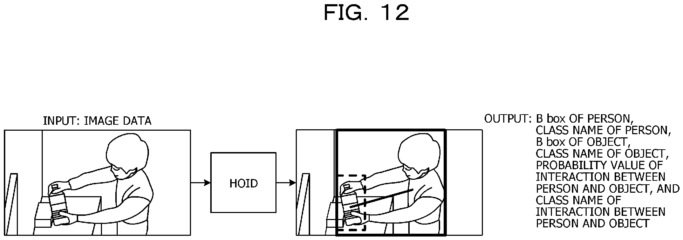

FIG. 12 is a diagram for describing specification of a relationship by HOID. As illustrated in FIG. 12, the relationship specification unit 42 inputs each of the frames (image data) included in the video data to the HOID (relationship model 17), and acquires an output result of the HOID. Specifically, the relationship specification unit 42 acquires a B box of a person, a class name of the person, a B box of an object, a class name of the object, a probability value of interaction between the person and the object, and a class name of the interaction between the person and the object.

As a result, for example, the relationship specification unit 42 specifies a "human (customer)", a "product (thing)", or the like as the class of the person, and specifies a relationship that the "customer holds the product" between the "human (customer)" and the "product (thing)". The relationship specification unit 42 executes the relationship specification processing described above for each subsequent frame, such as a frame 2 and a frame 3, to specify a relationship "hold a product A", a relationship "releasing the product A", and the like for the respective frames. Note that the relationship specification unit 42 may also acquire a product purchase status by a self-checkout machine or the like or information at the time of leaving.

Furthermore, the relationship specification unit 42 may also specify time and a location at which an action has been performed and information related to a relationship from the action of a customer included in the video data with respect to an object. For example, the relationship specification unit 42 specifies time of a frame in video data for which the relationship has been specified, a location of the camera 2 that has captured the video data, and the like.

### (Action Recognition)

The action recognition unit 43 is a processing unit that recognizes an action and a gesture of a person from video data using the action recognition model 18. Specifically, the action recognition unit 43 inputs each frame in the video data to the action recognition model 18, specifies the action and gesture of the person using skeleton information and a basic motion of each part of the person obtained from the action recognition model 18, and outputs the specified action and gesture to the evaluation acquisition unit 44, the registration unit 45, and the like.

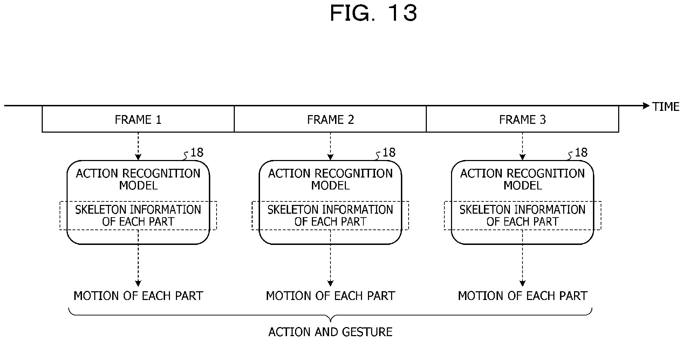

FIG. 13 is a diagram for describing action recognition. As illustrated in FIG. 13, the action recognition unit 43 inputs a frame 1 that is image data to the action recognition model 18. The action recognition model 18 generates skeleton information of each part according to the input of the frame 1, and outputs a motion of each part according to the skeleton information of each part. For example, the action recognition unit 43 may acquire motion information of each part such as "face: facing front, arms: being raised, legs: walking, ..." by using the action recognition model 18.

Furthermore, the action recognition unit 43 also executes recognition processing using the action recognition model 18 for the respective subsequent frames of the frame 2 and the frame 3, and specifies motion information of each part of a person appearing in the frame for each of the frames. Then, the action recognition unit 43 may also refer to the association between a representative gesture and a change in an action held in advance in association, and specify a more specific action, gesture, and the like using a change in an action recognition result (in other words, the motion information of each part).

For example, the action recognition unit 43 may recognize a "dissatisfied" gesture in a case where a "dissatisfied motion" designated in advance is detected, such as a case where an orientation of a face moves left and right within five frames or a case where a product is returned to an original state after fifteen or more frames have passed after holding of the product. Furthermore, the action recognition unit 43 may recognize a "satisfied" gesture in a case where a "satisfied motion" designated in advance is detected, such as a case where a product is put in a basket within less than three frames after holding of the product.

The evaluation acquisition unit 44 is a processing unit that acquires a psychological evaluation of the customer 5 with respect to a product for which a relationship has been specified by the relationship specification unit 42. Specifically, the evaluation acquisition unit 44 may also adopt a "gesture" recognized by the action recognition unit 43 as the psychological evaluation.

Furthermore, the evaluation acquisition unit 44 may transmit a questionnaire regarding a psychological index regarding a product of the customer 2 to a terminal associated with the customer 5, and acquire an answer result of the questionnaire received from the terminal as the psychological evaluation of the customer.

As a specific example, the evaluation acquisition unit 44 generates a partial questionnaire for inquiring of items that have not been specified from an action of the customer 2 with respect to a product among a plurality of items included in a questionnaire stored in the questionnaire DB 14. Then, the evaluation acquisition unit 44 may transmit the partial questionnaire to the terminal of the customer and acquire an answer result of the questionnaire received from the terminal as the psychological evaluation of the customer.

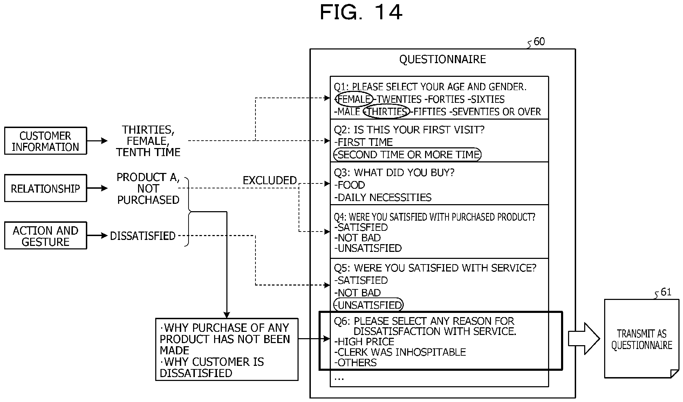

FIG. 14 is a diagram for describing generation and transmission of a questionnaire. As illustrated in FIG. 14, the evaluation acquisition unit 44 automatically inputs "thirties and female" to the "age and gender" of Q1 of the questionnaire and automatically inputs "second or more time" to "Is this your first visit?" of Q2 of the questionnaire using customer information (thirties, female, and the number of visits (tenth time)) acquired by the acquisition unit 22.

Furthermore, the evaluation acquisition unit 44 excludes Q3 of the questionnaire inquiring about a product purchase status and Q4 of the questionnaire inquiring about a satisfaction level of a purchased product from the questionnaire using a relationship "product A, not purchased" between the customer and the product specified by the relationship specification unit 42. The evaluation acquisition unit 44 automatically inputs "unsatisfied" to "Were you satisfied with service?" of Q5 of the questionnaire using an action and a gesture "dissatisfied" specified by the action recognition unit 43.

Moreover, the evaluation acquisition unit 44 specifies "why a purchase of any product has not been made and why the customer is dissatisfied" using the relationship "product A, not purchased" between the customer and the product specified by the relationship specification unit 42 and the action and gesture "dissatisfied" specified by the action recognition unit 43. That is, the evaluation acquisition unit 44 determines that "why?" corresponds to the psychological evaluation of the customer. As a result, the evaluation acquisition unit 44 selects "Please select any reason for dissatisfaction with service." of Q6 corresponding to "why?" as a partial questionnaire 61 among the items included in the questionnaire, and transmits the partial questionnaire 61 to a "notification destination" stored in the customer DB 13.

Then, in a case where an answer "clerk was inhospitable" for the partial questionnaire 61 is received, the evaluation acquisition unit 44 determines the psychological evaluation of the customer as "clerk was inhospitable". Note that the evaluation acquisition unit 44 may also determine which questionnaire item is to be selected for a partial questionnaire by using management data in which at least one of 5W1H is associated with each combination of a relationship specification result and an action recognition result. Furthermore, in general, the questionnaire of "why" is the most desired information, and thus, the evaluation acquisition unit 44 may also transmit only the questionnaire item corresponding to "why" as the partial questionnaire.

The registration unit 45 is a processing unit that registers, in the analysis result DB 19, information related to a relationship between the customer 2 and a product specified by the relationship specification unit 23 and a psychological evaluation of the customer 2 acquired by the evaluation acquisition unit 44 in association with each other. Specifically, the registration unit 45 registers information related to a specified time, location, and relationship in the analysis result DB 19 in association with an answer result of a partial questionnaire.

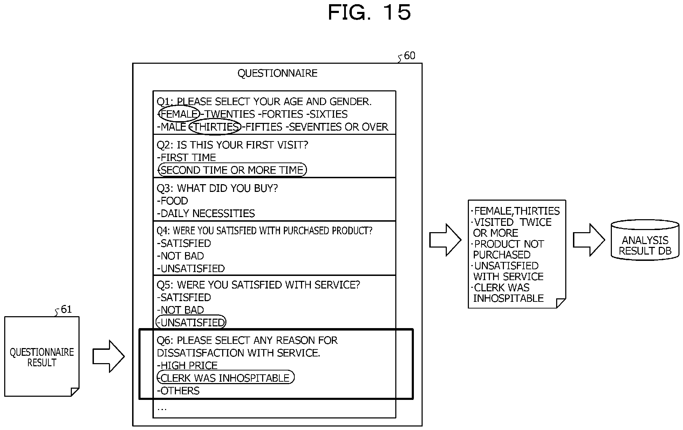

FIG. 15 is a diagram for describing registration of an analysis result. As illustrated in FIG. 15, the registration unit 45 acquires "female, thirties, visited twice or more, and unsatisfied with service" automatically input by the evaluation acquisition unit 44 among the items of the questionnaire, and acquires a result "clerk was inhospitable" of the partial questionnaire 61. Then, the registration unit 45 registers "female, thirties, visited twice or more, unsatisfied with service, and clerk was inhospitable" thus acquired in the analysis result DB 19.

Note that the registration unit 45 may also register, in the analysis result DB 19, various types of information such as time of a frame in video data whose relationship has been specified by the relationship specification unit 42, and a location of the camera 2 that has captured the video data. For example, the registration unit 45 may register time "13:00", a location "product shelf YY", information regarding relationships "held product A in the hand", "stopped at product shelf YY", and the like in the analysis result DB 19. Furthermore, the registration unit 45 may also register only the customer information and the answer result of the partial questionnaire in the analysis result DB 19. That is, the registration unit 45 may register an optional analysis item desired by a user.

### <Flow of Processing>

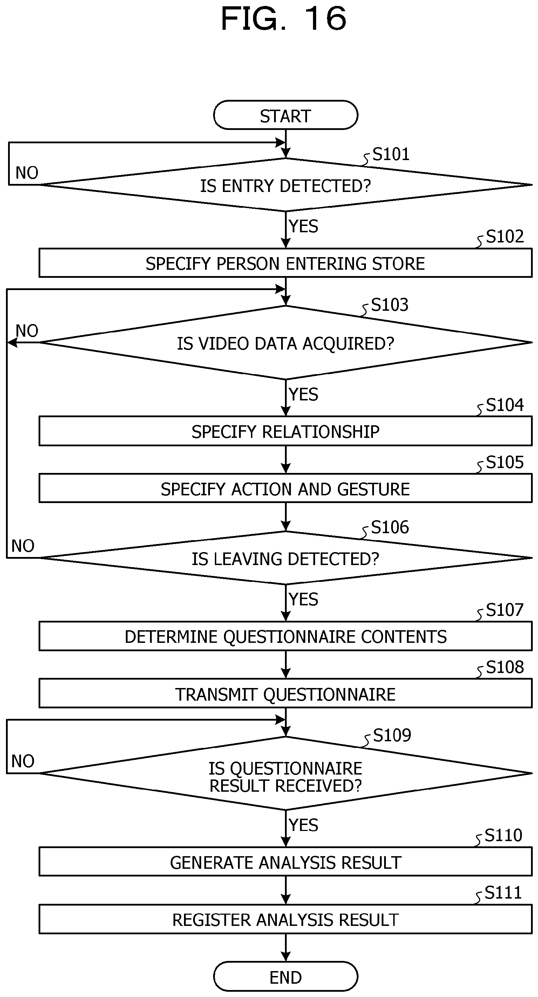

FIG. 16 is a flowchart illustrating a flow of processing according to the first embodiment. Note that processing from when one customer enters the store to when the customer leaves the store will be described here as an example, but the operation processing unit 40 is not requested to follow one customer, and may execute the processing described above using each piece of video data captured by each of the cameras 2. In that case, the operation processing unit 40 may distinguish each customer by recognizing each person appearing in the video data at the time of entry and assigning an identifier or the like. Furthermore, it is assumed that pre-processing has been completed.

As illustrated in FIG. 16, when an entry of the customer 2 is detected (S101: Yes), the operation processing unit 40 of the information processing device 10 specifies the person entering the store and acquires customer information (S102).

Subsequently, when the video data is acquired (S103: Yes), the operation processing unit 40 specifies a relationship between the customer and a product using the video data and the relationship model 17 (S104), and specifies an action and a gesture of the customer with respect to the product using the video data and the action recognition model 18 (S105).

Thereafter, S103 and subsequent steps are repeated until leaving is detected (S106: No), and when the leaving is detected (S106: Yes), the operation processing unit 40 determines questionnaire contents using the specified relationship, action, and gesture (S107).

Then, the operation processing unit 40 transmits the questionnaire (partial questionnaire 61) inquiring about the determined questionnaire contents (S108), and when receiving a questionnaire result (S109: Yes), generates an analysis result (S110), and registers the analysis result in the analysis result DB 19 (S111).

### <Effect>

As described above, the information processing device 10 may automatically input most items among the number of items of the questionnaire from the video data, and transmit only questionnaire items that are not specifiable from the video data. Therefore, the information processing device 10 may implement an increase in the number of customers who answer the questionnaire by mitigating the burden on the customers, collect more useful information, and reduce the amount of processing needed to construct the database.

Furthermore, the information processing device 10 may implement pinpoint questionnaire transmission, and thus, may mitigate questionnaire repellency of a responder and improve a response rate.

### [Second Embodiment]

Meanwhile, the example of using a model for HOID has been described as the example of specifying a relationship between a customer and a product in the first embodiment, but the present invention is not limited to this, and a scene graph that is an example of graph data indicating a relationship between the respective targets included in video data may also be used.

Therefore, in a second embodiment, an example in which a relationship specification unit 42 of an operation processing unit 40 specifies a relationship between a customer and a product using a scene graph will be described. The scene graph is graph data in which each object (a person, a product, or the like) included in each piece of image data in video data and a relationship between the respective objects are described.

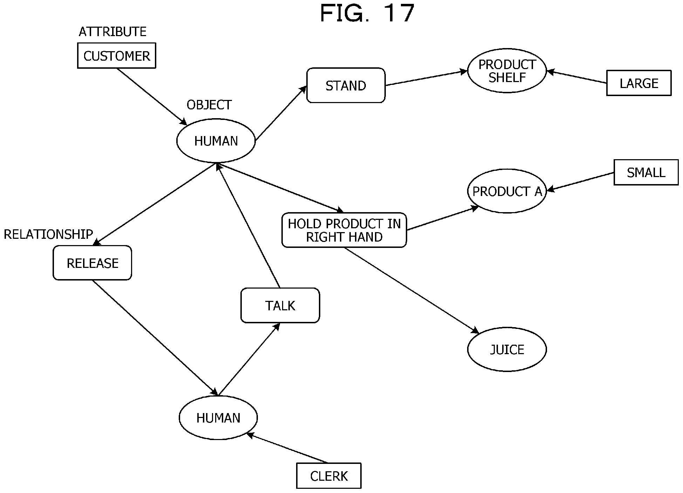

FIG. 17 is a diagram illustrating an example of a scene graph. As illustrated in FIG. 17, the scene graph is a directed graph in which objects appearing in image data are set as nodes, each of the nodes has an attribute (for example, an object type), and a relationship between the nodes is set as a directed edge. The example of FIG. 17 indicates that there is a relationship "talk" between a node "human" of an attribute "clerk" and a node "human" of an attribute "customer". In other words, it is defined that there is a relationship "a clerk talks to a customer". Furthermore, it is indicated that there is a relationship "stand" between the node "human" of the attribute "customer" and a node "product" of an attribute "large". In other words, it is defined that there is a relationship "the customer stands in front of a product shelf of a large product".

The relationships indicated here are merely examples. For example, the relationship is not limited to a simple relationship such as "hold", but includes a complicated relationship such as "hold a product A in a right hand". Note that each of a scene graph corresponding to a relationship between a human and a human and a scene graph corresponding to a relationship between a human and a thing may be stored, or one scene graph including each relationship may be stored. Furthermore, the scene graph is generated by a control unit 20 to be described later, but data generated in advance may be used.

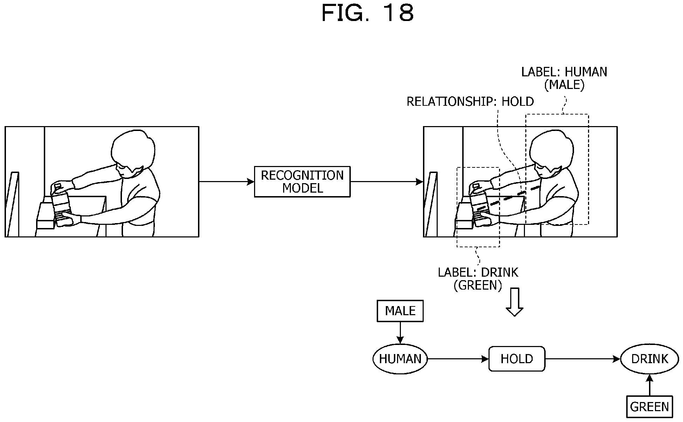

Subsequently, generation of a scene graph will be described. FIG. 18 is a diagram for describing a generation example of a scene graph indicating a relationship between a human and a thing. As illustrated in FIG. 18, a pre-processing unit 30 inputs image data to a trained recognition model, and acquires a label "human (male)", a label "drink (green)", and a relationship "hold" as output results of the recognition model. That is, the pre-processing unit 30 acquires that "a male holds a green drink". As a result, the pre-processing unit 30 generates a scene graph that associates the relationship "hold" between a node "human" having an attribute "male" and a node "drink" having an attribute "green". Note that the generation of the scene graph is merely an example, and other methods may also be used, and manual generation by an administrator or the like is also possible.

Next, specification of a relationship using a scene graph will be described. The relationship specification unit 42 executes relationship specification processing of specifying a relationship between a person and a person or a relationship between a person and a thing appearing in video data in accordance with the scene graph. Specifically, for each of frames included in the video data, the relationship specification unit 42 specifies a type of a human and a type of a thing appearing in the frame and searches the scene graph using each specified piece of information to specify the relationship. Then, the relationship specification unit 42 outputs the specified relationship to each processing unit.

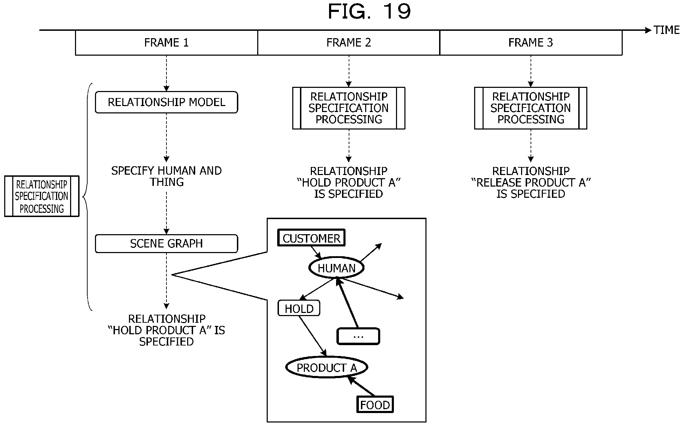

FIG. 19 is a diagram for describing specification of a relationship by a scene graph. As illustrated in FIG. 19, for a frame 1, the relationship specification unit 42 specifies a type of a human, a type of a thing, the number of persons, and the like in the frame 1 by using a result obtained by inputting the frame 1 into a machine-learned machine learning model or by known image analysis on the frame 1. For example, the relationship specification unit 42 specifies "human (customer)" as the type of the human and "product (product A)" as the type of the thing. Thereafter, the relationship specification unit 42 specifies a relationship "a human (customer) holds a product (product A)" between a node "human" of an attribute "customer" and a node "product A" of an attribute "food" in accordance with the scene graph. The relationship specification unit 42 executes the relationship specification processing described above for each subsequent frame, such as a frame 2 and a frame 3, to specify a relationship for each frame.

As described above, an information processing device 10 according to the second embodiment may easily execute determination of a relationship suitable for a store using a scene graph generated for each store, for example, without performing retraining according to the store such as a machine learning model. Therefore, the information processing device 10 according to the second embodiment may easily execute introduction of a system and the like in the present embodiment.

### [Third Embodiment]

Meanwhile, as the action recognition model 18 described above, a machine learning model that performs classification into binary classes may also be used in addition to a machine learning model that recognizes an action and a gesture of a person from video data. In other words, as the action recognition model 18, a model that detects a "hesitating" action corresponding to an action or a gesture of a questionnaire transmission target may be used.

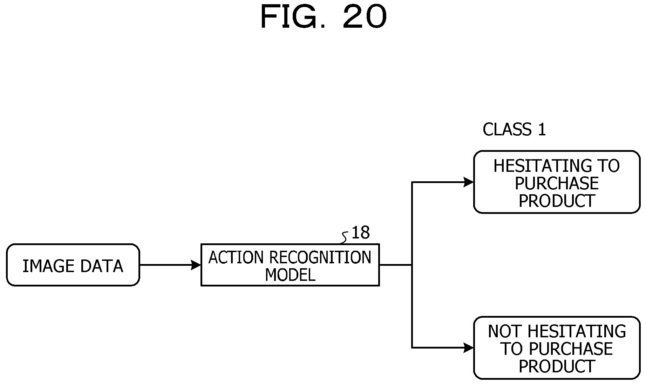

FIG. 20 is a diagram for describing an action recognition model 18 according to a third embodiment. As illustrated in FIG. 20, in response to an input of image data, the action recognition model 18 determines two values of a class 1 "hesitating to purchase product" and a class 2 "not hesitating to purchase product". Note that an output result of the action recognition model 18 includes a degree of reliability (for example, a probability value) of each class.

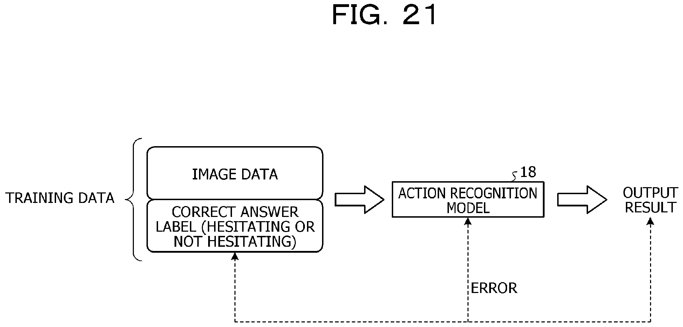

Next, training of the action recognition model 18 according to the third embodiment will be described. FIG. 21 is a diagram for describing machine learning of the action recognition model 18 according to the third embodiment. As illustrated in FIG. 21, a pre-processing unit 30 inputs, to the action recognition model 18, "image data" in which a state where a person is selecting a product appears as an explanatory variable, and training data having "hesitating" or "not hesitating" as a correct answer label which is an objective variable, and acquires an output result of the action recognition model 18. Thereafter, the pre-processing unit 30 executes update of parameters of the action recognition model 18 so as to reduce an error between the output result of the action recognition model 18 and the correct answer label. As described above, the pre-processing unit 30 executes the training of the action recognition model 18 and generates the action recognition model 18.

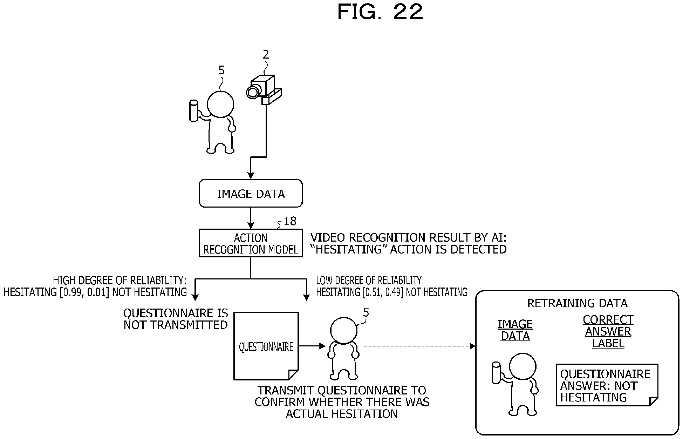

Next, questionnaire transmission will be described using the trained action recognition model 18. FIG. 22 is a diagram for describing questionnaire transmission using the action recognition model 18 according to the third embodiment. As illustrated in FIG. 22, an operation processing unit 40 inputs each of frames in video data captured by a camera 2 to the action recognition model 18, and acquires an output result of the action recognition model 18.

Then, in a case where the class 1 "hesitating" is acquired as the output result of the action recognition model 18, a difference between the degree of reliability of the class 1 "hesitating" and the degree of reliability of the class 2 "not hesitating" is equal to or larger than a threshold, and the output result has a high degree of reliability, the operation processing unit 40 suppresses the questionnaire transmission.

On the other hand, in a case where the class 1 "hesitating" is acquired as the output result of the action recognition model 18, the difference between the degree of reliability of the class 1 "hesitating" and the degree of reliability of the class 2 "not hesitating" is less than the threshold, and the output result has a low degree of reliability, the operation processing unit 40 executes the questionnaire transmission. Note that, in a case where the class 2 "not hesitating" is acquired as the output result of the action recognition model 18, the operation processing unit 40 executes the questionnaire transmission regardless of the difference in the degree of reliability.

That is, the operation processing unit 40 execute control of the questionnaire transmission according to the degree of reliability in a case where the class 1 "hesitating" is specified.

Moreover, the operation processing unit 40 may also generate retraining data using a questionnaire result. For example, it is assumed that the operation processing unit 40 has executed questionnaire transmission and has received "not hesitating" as a questionnaire answer since an output result obtained by inputting image data AA to the action recognition model 18 is the class 1 "hesitating" with a low degree of reliability. In this case, the operation processing unit 40 may generate training data for retraining having the "image data AA" as an explanatory variable and "not hesitating" as an objective variable. The pre-processing unit 30 may improve recognition accuracy of the action recognition model 18 by executing retraining of the action recognition model 18 using the training data for retraining.

Note that a questionnaire transmitted here may be the partial questionnaire 61 described above. For example, in a case where a recognition result is the "class 1 "hesitating" with a high degree of reliability", which is an example of a first condition, the operation processing unit 40 registers an analysis result using the automatic acquisition described in the first embodiment. On the other hand, in a case where a recognition result is the "class 1 "hesitating" with a low degree of reliability" or the "class 2 "not hesitating"", which is an example of a second condition, the operation processing unit 40 registers an analysis result using the automatic acquisition and an answer result of the partial questionnaire described in the first embodiment.

Furthermore, the transmitted questionnaire may be the entire questionnaire described in the first embodiment, or may be another question information prepared in advance. That is, the operation processing unit 40 may also transmit a questionnaire 60 only in a case where the action recognition model 18 of the third embodiment detects the class 1 "hesitating" with a high degree of reliability without executing the relationship specification processing, the action and gesture specification processing, and the like of the first embodiment.

Furthermore, the action recognition model 18 that performs not only the binary classification but also multi-class classification may be used. For example, the action recognition model 18 performs multi-class classification including a class 1 "very hesitating", a class 2 "hesitating", a class 3 "not hesitating", a class 4 "none of these", and the like. In this case, when a difference between a class having the highest degree of reliability and a class having the second highest degree of reliability is equal to or larger than a threshold, the action recognition model 18 registers an analysis result using the automatic acquisition described in the first embodiment. On the other hand, when the difference between the class having the highest degree of reliability and the class having the second highest degree of reliability is less than the threshold, the action recognition model 18 registers an analysis result using the automatic acquisition and an answer result of the partial questionnaire described in the first embodiment.

In this manner, an information processing device 10 according to the third embodiment may control the questionnaire transmission according to a degree of reliability of a recognition result of the action recognition model 18, and thus, it is possible to acquire a user evaluation by the questionnaire not only in a state where a psychological evaluation of a customer is bad but also in a state where the psychological evaluation of the customer is slightly bad. As a result, the information processing device 10 may collect an accurate analysis result.

### [Fourth Embodiment]

Meanwhile, for example, there is a case where it is desired to conduct a questionnaire intended for individuals by narrowing down conditions such as elderly people and dissatisfied customers. In a case of an automatic questionnaire that does not involve human intervention, the questionnaire intended for individuals may be conducted when the questionnaire may be sent to a personal terminal such as a smartphone, but there is a case where it is difficult to send the questionnaire to the personal terminal because personal information of a visitor is unknown in a retail store or the like. Even in such a case, an information processing device 10 may transmit the questionnaire not only to a terminal of a customer but also to an optional location.

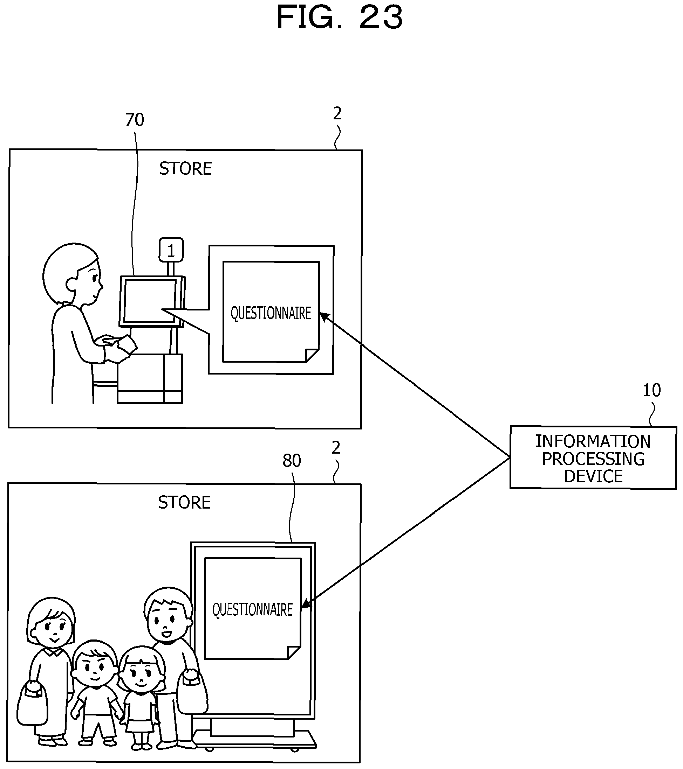

FIG. 23 is a diagram for describing questionnaire transmission according to a fourth embodiment. As illustrated in FIG. 23, an operation processing unit 40 of the information processing device 10 may transmit a questionnaire 60 or a partial questionnaire 61 to a display of a self-checkout machine 70 or signage 80 of the store 2.

However, in a case where a questionnaire intended for individuals is to be conducted using a facility of the store 2 such as digital signage with a touch function, there is a possibility that a visitor different from a target person answers the questionnaire so that the questionnaire narrowing down conditions is not established.

Therefore, the information processing device 10 displays a screen for answering the questionnaire on the signage only in a situation where only the target person may answer the questionnaire by using each positional relationship among signage for answering the questionnaire, the questionnaire target person, and a surrounding person other than the target person, and information regarding a posture of each person, and encourages the target person to answer the questionnaire.

For example, the information processing device 10 analyzes a video obtained by capturing a first area including a customer or a product, thereby specifying a state of the customer with respect the product among a plurality of persons included in the video. The information processing device 10 generates a questionnaire related to the customer or the product based on the state of the customer with respect to the product. Then, the information processing device 10 specifies a position and an orientation of each of the plurality of customers with respect to the signage by analyzing a video obtained by capturing a second area including the signage. Thereafter, the information processing device 10 causes the signage to display a questionnaire for a specific customer when the specific customer is in the state of being closest to the signage and faces the signage and another customer is away from the specific customer and the signage and does not face the signage based on the specified positions and orientations.

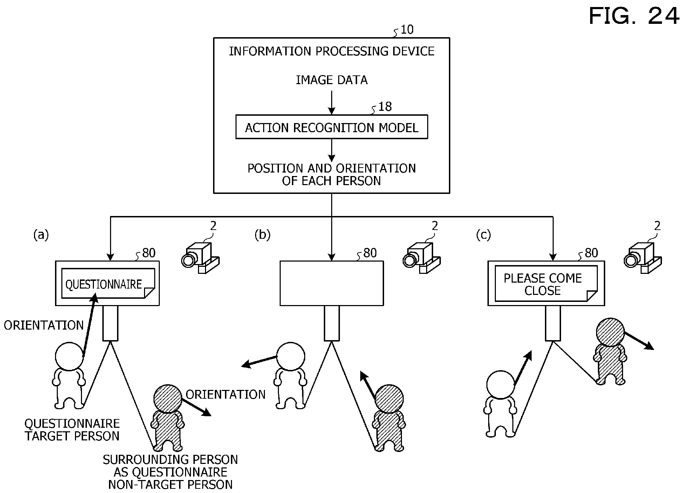

FIG. 24 is a diagram for describing a specific example of the questionnaire transmission according to the fourth embodiment. As illustrated in FIG. 24, the operation processing unit 40 of the information processing device 10 inputs each piece of image data (each frame) in video data to an action recognition model 18, and specifies positions and orientations of persons appearing in the respective pieces of image data. Here, from a processing result of a relationship specification unit 42, the operation processing unit 40 specifies a customer holding a product in a hand, a customer having made a payment, and a customer having stayed in front of a product shelf for a certain period of time or more as questionnaire target persons (specific customers).

Then, as illustrated in (a) of FIG. 24, the operation processing unit 40 displays the questionnaire on the signage 80 in a case where it has been specified that the questionnaire target person faces the signage 80 and is at a position where the signage 80 may be operated and a questionnaire non-target person does not face the signage 80 and is not at the position where the signage 80 may be operated based on the positions and orientations of the persons appearing in the respective pieces of image data.

On the other hand, as illustrated in (b) of FIG. 24, the operation processing unit 40 does not display the questionnaire on the signage 80 in a case where it has been specified that the questionnaire target person does not face the signage 80 and the questionnaire non-target person faces the signage 80 and is at the position where the signage 80 may be operated based on the positions and orientations of the persons appearing in the respective pieces of image data.

Furthermore, as illustrated in (c) of FIG. 24, the operation processing unit 40 displays a message to make the questionnaire target person come close to the signage 80 in a case where it has been specified that the questionnaire target person faces the signage 80 but is not at the position where the signage 80 may be operated and the questionnaire non-target person does not face the signage 80 based on the positions and orientations of the persons appearing in the respective pieces of image data.

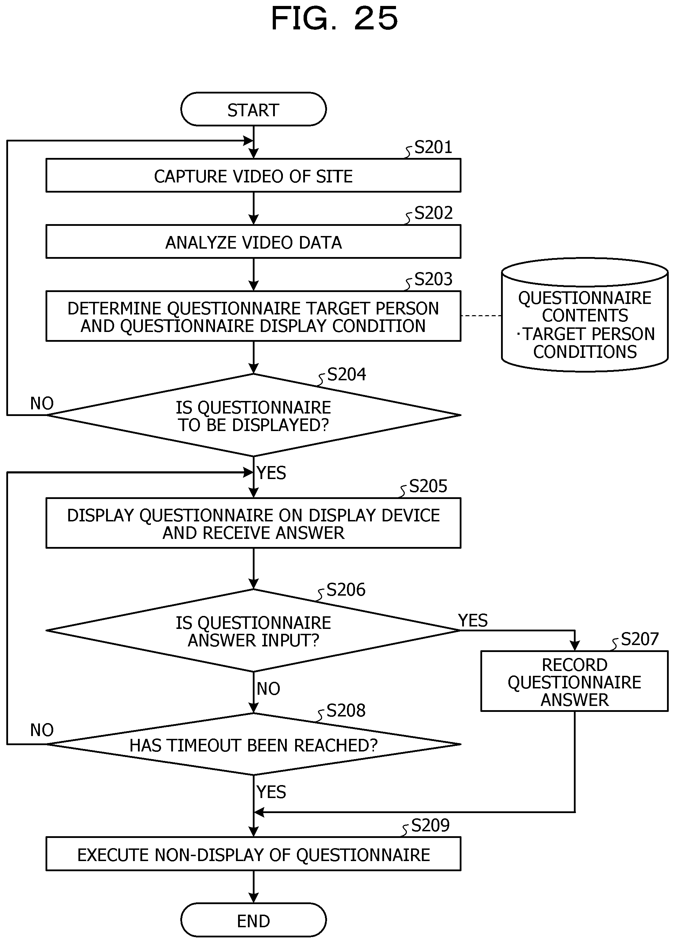

FIG. 25 is a flowchart illustrating a flow of processing according to the fourth embodiment. As illustrated in FIG. 25, the operation processing unit 40 acquires video data of a site (S201) and executes analysis of the video data (S202). For example, the operation processing unit 40 executes specification of a relationship, specification of a position and an orientation of a person, specification of an action and a gesture, and the like.

Subsequently, the operation processing unit 40 executes determination of a questionnaire target person and a questionnaire display condition (S203). For example, the operation processing unit 40 reads predetermined questionnaire contents and target person conditions, and determines whether or not the display condition is satisfied using an analysis result.

Here, in a case where it is determined not to display the questionnaire (S204: No), the operation processing unit 40 repeats S201 and subsequent steps. On the other hand, in a case where it is determined to display the questionnaire (S204: Yes), the operation processing unit 40 execute display of the questionnaire on a display device such as the signage 80 and reception of an answer (S205).

Thereafter, when receiving an input of the questionnaire answer (S206: Yes), the operation processing unit 40 executes recording of the questionnaire answer (S207) and executes non-display of the questionnaire (S209). On the other hand, the operation processing unit 40 executes display of the questionnaire on the display device such as the signage 80 and reception of an answer (S205) until reaching a timeout (S208: No) without receiving an input of any answer to the questionnaire (S206: No). Note that, in a case where the input of any answer to the questionnaire is not received (S206: No) and the timeout is reached (S208: Yes), the operation processing unit 40 executes the non-display of the questionnaire (S209).

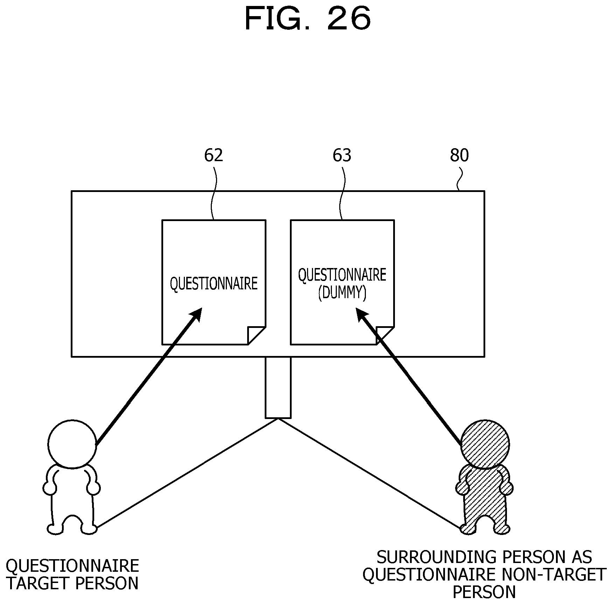

Note that the operation processing unit 40 may also display a dummy questionnaire that is not used for analysis particularly in a case of the signage 80 having a large screen or the like. FIG. 26 is a diagram for describing a questionnaire display example of signage according to the fourth embodiment.

As illustrated in FIG. 26, the operation processing unit 40 specifies each position and each orientation of a questionnaire target person and a questionnaire non-target person according to the positions and orientations of the persons appearing in each piece of image data. Then, the operation processing unit 40 displays a questionnaire 62 in a region of the signage 80 facing the questionnaire target person, and displays a dummy questionnaire 63 in a region of the signage 80 facing the questionnaire non-target person.

Thereafter, the operation processing unit 40 registers an answer result of the questionnaire 62 as an analysis result, and discards an answer result of the dummy questionnaire 63. Note that it is also useful to manage the answer result of the dummy questionnaire 63 as information regarding an accompanying person.

In this manner, the information processing device 10 determines the signage 80 for answering the questionnaire and the positions and postures of the questionnaire target person and the surrounding person thereof using a video of a surveillance camera or the like. The information processing device 10 displays the screen for answering the questionnaire on the signage 80 only under a condition that the person closest to the signage 80 for answering the questionnaire is the questionnaire target person, the target person has a body facing the signage 80, and there is no person having a body facing the signage 80 other than the target person. As a result, the information processing device 10 may prevent a situation where a person who is not the questionnaire target answers the questionnaire to degrade answer quality.

### [Fifth Embodiment]

In the meantime, although the embodiments of the present invention have been described so far, the present invention may be implemented in various different modes in addition to the embodiments described above.

### <Numerical Values and the like>

The numerical value examples, the number of cameras, the label names, the rule examples, the action examples, the state examples, and the like used in the embodiments described above are merely examples, and may be optionally changed. Furthermore, the flow of the processing described in each of the flowcharts may be appropriately changed within a range without inconsistency. Furthermore, the store has been described as an example in the embodiments described above, but the present invention is not limited to this, and may also be applied to, for example, a warehouse, a factory, a classroom, a train interior, a cabin of an airplane, and the like.

### <System>

Information including processing procedures, control procedures, specific names, various types of data and parameters described above or illustrated in the drawings may be optionally changed except the case of being particularly noted.

Furthermore, each component of each device illustrated in the drawings is functional and conceptual and does not necessarily have to be physically configured as illustrated in the drawings. In other words, specific modes of distribution and integration of each device are not limited to those illustrated in the drawings. That is, all or a part thereof may be configured to be functionally or physically distributed or integrated in optional units depending on various loads, use situations, and the like.

Moreover, for each processing function to be performed by each device, all or an optional part of the processing functions may be implemented by a CPU and a program analyzed and executed by the CPU or may be implemented as hardware by wired logic.

### <Hardware of Information Processing Device 10>

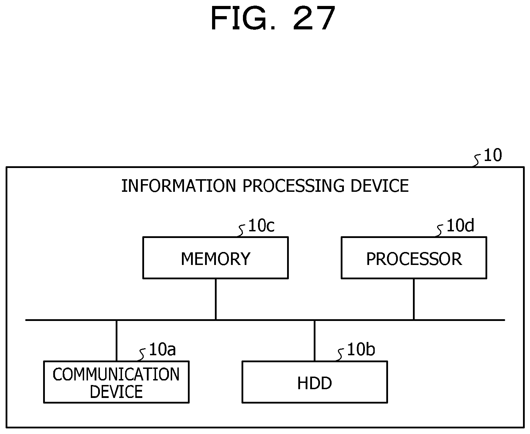

FIG. 27 is a diagram for describing a hardware configuration example of the information processing device 10. As illustrated in FIG. 27, the information processing device 10 includes a communication device 10a, a hard disk drive (HDD) 10b, a memory 10c, and a processor 10d. Furthermore, the respective units illustrated in FIG. 27 are mutually coupled by a bus or the like.

The communication device 10a is a network interface card or the like and communicates with another device. The HDD 10b stores a program and a DB for operating the functions illustrated in FIG. 4.

The processor 10d reads a program for executing processing similar to that of each processing unit illustrated in FIG. 4 from the HDD 10b or the like and develops the read program in the memory 10c, thereby operating the process of executing each function described in FIG. 4 and the like. For example, this process executes functions similar to the respective processing units of the information processing device 10. Specifically, the processor 10d reads the program having the functions similar to those of the pre-processing unit 30, the operation processing unit 40, and the like from the HDD 10b or the like. Then, the processor 10d executes a process of executing the processing similar to that of the pre-processing unit 30, the operation processing unit 40, or the like.

In this manner, the information processing device 10 operates as an information processing device that executes an information processing method by reading and executing the program. Furthermore, the information processing device 10 may also implement the functions similar to those in the embodiments described above by reading the program described above from a recording medium by a medium reading device and executing the read program described above. Note that the program referred to in the other embodiments is not limited to being executed by the information processing device 10. For example, the embodiments described above may be similarly applied also in a case where another computer or server executes the program, or in a case where these computer and server execute the program in cooperation.

The program may be distributed via a network such as the Internet. Furthermore, this program may be recorded on a computer-readable recording medium such as a hard disk, a flexible disk (FD), a CD-ROM, a magneto-optical disk (MO), or a digital versatile disc (DVD), and may be executed by being read from the recording medium by a computer.

### <Hardware of Signage 80>

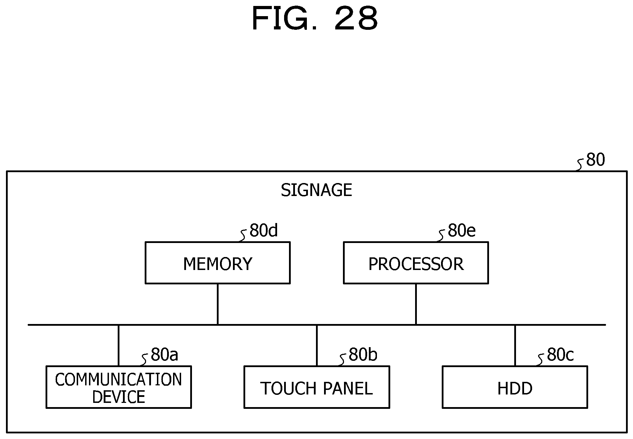

FIG. 28 is a diagram for describing a hardware configuration example of the signage 80. As illustrated in FIG. 28, the signage 80 includes a communication device 80a, a touch panel 80b, an HDD 80c, a memory 80d, and a processor 80e. Furthermore, the respective units illustrated in FIG. 28 are mutually coupled by a bus or the like.

The communication device 80a is a network interface card or the like and communicates with another device. The touch panel 80b displays a questionnaire and receives answers to the questionnaire. The HDD 80c stores various programs and DBs.

The processor 80e reads a program for executing processing similar to the processing described in the fourth embodiment from the HDD 80c or the like and develops the program in the memory 80d, thereby operating a process of executing each type of processing. For example, this process executes functions similar to reception of a questionnaire, display of a questionnaire, and reception of an answer to a questionnaire.

In this manner, the signage 80 operates as an information processing device that executes a display method by reading and executing the program. Furthermore, the signage 80 may also implement the functions similar to those in the embodiments described above by reading the program described above from a recording medium by a medium reading device and executing the read program described above. Note that the program referred to in the other embodiments is not limited to being executed by the signage 80. For example, the embodiments described above may be similarly applied also in a case where another computer or server executes the program, or in a case where these computer and server execute the program in cooperation.

The program may be distributed via a network such as the Internet. Furthermore, this program may be recorded on a computer-readable recording medium such as a hard disk, a flexible disk, a CD-ROM, an MO, or a DVD, and may be executed by being read from the recording medium by a computer.

### CITATION LIST

### PATENT DOCUMENT

Patent Document 1: International Publication Pamphlet No. WO 2019/049216

### REFERENCE SIGNS LIST

10Information processing device
11Communication unit
12Storage unit
13Customer DB
14Questionnaire DB
15Video data DB
16Training data DB
17Relationship model
18Action recognition model
19Analysis result DB
20Control unit
30Pre-processing unit
40Operation processing unit
41Acquisition unit
42Relationship specification unit
43Action recognition unit
44Evaluation acquisition unit
45Registration unit
80Signage

## Claims

1. A generation program for causing a computer to execute processing comprising:
acquiring video data;
specifying, by inputting the acquired video data to a machine learning model, a class of an action of a person included in the video data and a degree of reliability of the class; and
generating, based on the specified degree of reliability, question information related to the specified class.

2. The generation program according to claim 1, wherein,
the specifying includes
acquiring the machine learning model, which is trained based on training data that includes image data that includes a person and an object and a class that indicates an action of the person with respect to the object, so as to perform classification into a plurality of classes based on training data that includes image data that includes a person and an object and a class that indicates an action of the person with respect to the object,
specifying a degree of reliability in each of the plurality of classes by inputting the person included in the video data to the acquired machine learning model,
calculating a difference in the degree of reliability between a first class that has the highest specified degree of reliability and a second class that has the second highest specified degree of reliability, and
in response to detecting that the calculated difference in the degree of reliability satisfies a predetermined condition, outputting a questionnaire in which the person included in the video data and question information related to an object are associated with each other.

3. The generation program according to claim 2, wherein,
the specifying includes
calculating the difference in the degree of reliability between the first class that has the highest specified degree of reliability and the second class that has the second highest specified degree of reliability,
in response to detecting that the calculated difference in the degree of reliability satisfies a first condition, registering information related to the specified class, with respect to an item related to the specified class among a plurality of items included in a database stored in a storage device, and
in response to detecting that the calculated difference in the degree of reliability satisfies a second condition, registering an answer result to the questionnaire input by the person through a terminal, with respect to the item related to the specified class among the plurality of items included in the database stored in the storage device.

4. The generation program according to claim 3, the processing further comprising:
generating training data for retraining, in which the video data is used as an explanatory variable, and the answer result to the questionnaire is used as an objective variable; and
executing retraining of the machine learning model by using the training data for retraining.

5. A generation method implemented by a computer, the generation method comprising:
acquiring video data;
specifying, by inputting the acquired video data to a machine learning model, a class of an action of a person included in the video data and a degree of reliability of the class; and
generating, based on the specified degree of reliability, question information related to the specified class.

6. An information processing apparatus comprising: a control unit configured to perform processing including:
acquiring video data;
specifying, by inputting the acquired video data to a machine learning model, a class of an action of a person included in the video data and a degree of reliability of the class; and
generating, based on the specified degree of reliability, question information related to the specified class.
